(19) Europäisches Patentamt / European Patent Office / Office européen des brevets

(11) **EP 4 703 489 A1**

(12) **EUROPEAN PATENT APPLICATION**
published in accordance with Art. 153(4) EPC

(43) Date of publication:
04.03.2026 Bulletin 2026/10

(21) Application number: 24797197.1

(22) Date of filing: 26.04.2024

(51) International Patent Classification (IPC):
$C22C\ 38/00^{(2006.01)}$  $C21D\ 8/12^{(2026.01)}$
$H01F\ 1/147^{(2006.01)}$  $H01F\ 27/245^{(2006.01)}$
$C22C\ 38/06^{(2006.01)}$  $C22C\ 38/60^{(2006.01)}$

(52) Cooperative Patent Classification (CPC):
C21D 8/12; C22C 38/00; H01F 1/147; H01F 27/245;
C22C 38/06; C22C 38/60

(86) International application number:
PCT/JP2024/016512

(87) International publication number:
WO 2024/225454 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.04.2023 JP 2023073594

(71) Applicant: NIPPON STEEL CORPORATION
Chiyoda-ku
Tokyo 100-8071 (JP)

(72) Inventors:
• IWAKI Masataka
  Tokyo 100-8071 (JP)
• TANAKA Tomohito
  Tokyo 100-8071 (JP)
• KATAOKA Takashi
  Tokyo 100-8071 (JP)

(74) Representative: Vossius & Partner
Patentanwälte Rechtsanwälte mbB
Siebertstraße 3
81675 München (DE)

(54) **GRAIN-ORIENTED ELECTROMAGNETIC STEEL SHEET AND MANUFACTURING METHOD THEREFOR**

(57) In the grain-oriented electrical steel sheet, in a cross section parallel to both a rolling direction and a sheet thickness direction, compressive elastic stress in the rolling direction measured using EBSD has an maximum value of 100 MPa or less; and a region where the compressive elastic stress in the rolling direction introduced is 20 MPa or more is included in a percentage of 50% or more in terms of area fraction with respect to a region where the compressive elastic stress is introduced.

EP 4 703 489 A1

**Description**

TECHNICAL FIELD

The present invention relates to a grain-oriented electrical steel sheet and a manufacturing method thereof.

Priority is claimed on Japanese Patent Application No. 2023-073594, filed April 27, 2023, the content of which is incorporated herein by reference.

BACKGROUND ART

A grain-oriented electrical steel sheet is a soft magnetic material, and is mainly used as a core material of a transformer. Thus, the grain-oriented electrical steel sheet is required to have magnetic characteristics such as high magnetization characteristics and a low iron loss.

The iron loss is a power loss due to thermal energy consumption that occurs in a case where a core is excited by an AC magnetic field, and the iron loss is required to be as low as possible from the viewpoint of energy saving. The level of iron loss is affected by magnetic susceptibility, sheet thickness, coating tension, impurity amount, electric resistivity, crystal grain size, magnetic domain size, and the like. Even at present when various techniques have been developed regarding the grain-oriented electrical steel sheet, research and development for reducing the iron loss is being continued in order to increase energy efficiency.

For example, Patent Document 1 discloses a method for manufacturing a grain-**oriented** electrical steel sheet in which a magnetic domain is controlled by irradiation with a laser beam. The method includes a step of irradiating a surface of the grain-oriented electrical steel sheet with a condensed continuous wave laser beam while scanning the surface in a direction inclined from a rolling direction of the grain-oriented electrical steel sheet, and a step of repeating a portion scanned with the continuous wave laser beam while shifting the portion at a predetermined interval. When the average power of the continuous wave laser beam is represented as P (W), the scanning speed is represented as Vc (mm/s), the predetermined interval is represented as PL (mm), and an input energy Ua is defined as $Ua = P/(Vc \times PL)$ (mJ/mm$^2$), 1.0 mm $\leq$ PL $\leq$ 3.0 mm, and 0.8 mJ/mm$^2$ $\leq$ Ua $\leq$ 2.0 mJ/mm$^2$ are satisfied.

Patent Document 1 discloses that iron losses in both directions of an L direction and a C direction of the grain-oriented electrical steel sheet can be reduced easily while ensuring high productivity.

Patent Document 2 discloses a manufacturing method of a grain-oriented electrical steel sheet, the method including: scanning and irradiating a continuous oscillation laser beam to form linear closure domains approximately perpendicular to the rolling direction of the steel sheet at an approximately constant interval, thereby improving iron loss characteristics.

Patent Document 2 discloses that the laser is in the TEM$_{00}$ mode, in which the laser beam intensity distribution in a cross section perpendicular to the beam propagation direction has a maximum intensity in the vicinity of the optical axis center, and the rolling direction condensing diameter d [mm] of the irradiation beam, the scanning linear velocity V [mm/s] of the laser beam, and the average power P [W] of the laser are in the range of $0 < d \leq 0.2$ and $0.001 \leq P/V \leq 0.012$, so that a grain-oriented electrical steel sheet with a reduced iron loss is obtained.

Patent Document 3 discloses a manufacturing method of a grain-oriented electrical steel sheet, the method including: irradiating a laser beam at a constant interval to the surface a grain-oriented electrical steel sheet to improve the magnetic characteristics.

Patent Document 3 discloses that the laser is a pulsed oscillation Q-switched $CO_2$ laser, the irradiation beam shape is an ellipse having a major axis in the sheet width direction, and the irradiation power density of the laser pulse is set to equal to or less than the coating damage threshold of the steel sheet surface, thereby suppressing laser irradiation mark occurrence; and the major axis length of the elliptical beam is set to equal to or more than the interval of pulse beam irradiation in the sheet width direction to superimpose the continuous pulse beams on the steel sheet surface, thereby giving integrated irradiation energy necessary and sufficient for improving magnetic characteristics, suppressing laser irradiation mark, and efficiently obtaining a magnetic domain control effect.

On the other hand, in recent years, reduction in noise and vibration has been increasingly required for electromagnetic application equipment such as a transformer, and grain-oriented electrical steel sheets used for a transformer core have been required to be a material suitable for low noise and low vibration as well as low iron loss. It is presumed that one of the factors of noise and vibration of transformers due to material is magnetostriction of a grain-oriented electrical steel sheet. Herein, the magnetostriction is a vibration of a grain-oriented electrical steel sheet that is observed in the rolling direction when the grain-oriented electrical steel sheet is excited by alternating current and the outer shape of the grain-oriented electrical steel sheet is slightly changed due to strength change in the magnetization. Although the magnitude of the magnetostriction is as very small as $10^{-6}$ order, the magnetostriction generates vibration of the core, and the vibration propagates to the external structure such as the tank of the transformer to generate noise.

Although the laser irradiation to a grain-oriented electrical steel sheet as proposed in Patent Documents 1 to 3 described above is effective for iron loss reduction, there is a problem that closure domains formed by the laser irradiation increase magnetostriction and noise characteristics deteriorate.

In order to solve such a problem, for example, Patent Document 4 discloses a grain-oriented electrical steel sheet having a low iron loss, and causing small noise when incorporated into a transformer.

Patent Document 4 discloses that closure domain regions having a periodically changing width in the rolling direction in the steel sheet surface are formed; each of the closure domain regions satisfies the conditions that the ratio of the maximum width Wmax in the rolling direction in the steel sheet surface with respect to the minimum width Wmin (Wmax/Wmin) is 1.2 or more and 2.2 or less, the average width Wave in the rolling direction in the steel sheet surface is 80 $\mu$m or more and 250 $\mu$m or less, the maximum depth D in the sheet thickness direction is 32 $\mu$m or more, and (Wave $\times$ D)/s is 0.0007 mm or more and 0.0016 mm or less; and thereby a more favorable iron loss/noise balance can be achieved than before.

Patent Document 5 discloses a grain-oriented electrical steel sheet having local strains introduced in a direction crossing the rolling direction at a periodic interval with respect to the rolling direction, where a linear closure domain part is formed near the strains; a magnetic domain that extends from the closure domain part in the rolling direction and has a length of 1.2 mm or more in the rolling direction is included in the demagnetized state, and the magnetic domain is formed in the average number of 1.8 or more per 1 mm in the region along the closure domain part; and when the line interval of the closure domain part is defined as s (mm), the width w (mm) of the closure domain part and the depth h ($\mu$m) of the closure domain part in the sheet thickness direction satisfy the relationship of 4 mm ≤ s ≤ 1.5 mm and hw/s ≤ 0.9 $\mu$m.

Patent Document 5 suggests that the strain introduction amount index represented by hw/s affects iron loss and noise.

Patent Document 6 relates to a grain-oriented electrical steel sheet having a linear closure domain crossing the rolling direction that is periodically formed in the rolling direction, and discloses that the region of the formed closure domain has a strain distribution in a cross section in the rolling direction in which the maximum tensile strain in the sheet thickness direction is 0.45% or less, and the maximum tensile strain t (%) and the maximum compressive strain c (%) in the rolling direction satisfy the relationship of t + 0.06 ≤ t + c ≤ 0.35; and the iron loss $W_{17/50}$ is 0.90 W/kg or less and the noise is less than 45 dBA when a transformer is assembled therefrom.

Citation List

Patent Documents

Patent Document 1: Japanese Patent No. 4669565
Patent Document 2: Japanese Patent No. 4510757
Patent Document 3: Japanese Patent No. 3361709
Patent Document 4: Japanese Patent No. 6060988
Patent Document 5: Japanese Patent No. 6176282
Patent Document 6: Japanese Patent No. 5884165

SUMMARY OF INVENTION

Technical Problem

However, the techniques of Patent Documents 4 to 6 are insufficient for higher iron loss/noise balance as recently required.

Therefore, an object of the present invention is to provide a grain-oriented electrical steel sheet excellent in iron loss characteristics and noise characteristics (having a low iron loss and having a low noise when incorporated in a transformer: excellent in iron loss/noise balance) and a manufacturing method thereof.

Solution to Problem

The present inventors have studied a grain-oriented electrical steel sheet having a low iron loss and excellent noise characteristics. As a result, it has been found that iron loss reduction essentially requires a strain generated by irradiation with an energy ray such as a laser, but the strain generated by irradiation with an energy ray greatly differs depending on place, and includes a strain that does not contribute to iron loss reduction and deteriorates noise characteristics.

The present inventors further studied and found that irradiation with an energy ray in a state where only the surface layer area is heated can reduce the percentage of the strain that does not contribute to iron loss reduction and deteriorates noise characteristics, and can improve iron loss/noise balance.

The present invention has been made in view of the above findings. The gist of the present invention is as follows.

[1] In a grain-oriented electrical steel sheet of an embodiment of the present invention, in a cross section parallel to both a rolling direction and a sheet thickness direction, compressive elastic stress in the rolling direction measured using EBSD has an maximum value of 100 MPa or less; and a region where the compressive elastic stress in the rolling direction introduced is 20 MPa or more is included in a percentage of 50% or more in terms of area fraction with respect to a region where the compressive elastic stress is introduced.

[2] In another embodiment of the present invention, a manufacturing method of a grain-oriented electrical steel sheet includes: a heating step of heating a steel sheet; and an irradiation step of irradiating an energy ray to the steel sheet after the heating step, wherein

in the irradiation step, the irradiation with the energy ray is performed in a state where the steel sheet has a temperature of 200°C or higher at a surface, and has a temperature of 100°C or lower at a position 20 $\mu$m distant from the surface in a sheet thickness direction.

Advantageous Effects of Invention

According to the embodiment of the present invention, it is possible to provide a grain-oriented electrical steel sheet excellent in iron loss characteristics and noise characteristics; and a manufacturing method thereof.

DESCRIPTION OF EMBODIMENTS

The grain-oriented electrical steel sheet according to an embodiment of the present invention (grain-oriented electrical steel sheet according to the embodiment), and the manufacturing method of a grain-oriented electrical steel sheet according to the embodiment will be described.

[Grain-Oriented Electrical Steel Sheet]

As described above, iron loss reduction essentially requires a strain generated by irradiation with an energy ray such as a laser, but the strain generated by irradiation with an energy ray greatly differs depending on place in the steel sheet, and also includes a strain that does not contribute to iron loss reduction and deteriorates noise characteristics.

For example, when normal laser irradiation is performed, in the steel sheet, a strain generating a large compressive elastic stress exceeding 100 MPa in the rolling direction is introduced in the vicinity of the surface of the steel sheet irradiated with the laser; on the center side in the sheet thickness direction from the strain, a strain generating a medium (about 20 to 100 MPa) compressive elastic stress in the rolling direction is introduced; and a strain generating a relatively small (less than 20 MPa) compressive elastic stress is introduced in the vicinity of them. Although there is also a region where tensile stress is generated as elastic stress in the rolling direction, it is the strain generating compressive elastic stress in the rolling direction that contributes to improvement in iron loss. Therefore, it is important to control the distribution of compressive elastic stress in the rolling direction. In addition, the strain generating a large compressive elastic stress and the strain generating a relatively small compressive elastic stress are less likely to contribute to reduction in iron loss, and deteriorate noise characteristics. Therefore, in the embodiment, the grain-oriented electrical steel sheet has no strain generating a large compressive elastic stress and is reduced in the strain generating a relatively small compressive elastic stress, thereby increasing the percentage of the strain generating a medium compressive elastic stress in the introduced strains.

Whether strain is present may be evaluated through elastic stress. Specifically, in the grain-oriented electrical steel sheet according to the embodiment, in a cross section parallel to both the rolling direction and the sheet thickness direction, compressive elastic stress in the rolling direction measured using EBSD has an maximum value of 100 MPa or less; and a region where the compressive elastic stress introduced is 20 MPa or more is included in a percentage of 50% or more in terms of an area fraction with respect to a region where the compressive elastic stress is introduced.

When the maximum value of the compressive elastic stress in the rolling direction is more than 100 MPa (there is a strain generating a large compressive elastic stress), noise characteristics are deteriorated. Alternatively, when the percentage of the region of a compressive elastic stress of 20 MPa or more (the percentage of the region where a strain generating a compressive elastic stress of 20 MPa or more is introduced) is less than 50% in terms of area fraction (the strain introduction region includes a low strength strain in a large percentage), the noise characteristics are deteriorated, or the iron loss increases (the iron loss characteristics are deteriorated) due to the introduced strain being small.

Preferably, the maximum value of the compressive elastic stress in the rolling direction is more than 60 MPa and 100 MPa or less. This is because, in this case, the percentage of the region into which a strain having a strength generating a compressive elastic stress of 20 MPa or more is introduced is 50% or more in terms of area fraction.

The maximum value of the compressive elastic stress in the rolling direction and the introduction percentage of a compressive elastic stress of 20 MPa or more are determined by the following method.

In a cross section parallel to both the rolling direction and the sheet thickness direction (parallel to the rolling direction and parallel to the sheet thickness direction) (usually a cross section in the sheet thickness direction that is perpendicular to the scanning direction of the energy ray, because a grain-oriented electrical steel sheet is generally irradiated with an energy ray scanning in the sheet width direction), a region including the entire thickness in the sheet thickness direction, a center at the irradiation position of the energy ray, and a width that is two times of the irradiation width of the energy ray is specified as a measurement region, and mapping is performed thereto by an electron backscatter diffraction method (EBSD). For the measurement, the EBSD analysis surface needs to be subjected to surface treatment to remove mechanical strain due to polishing or cross-sectional processing. For example, a method may be used in which the analysis surface is mirror-polished and then the processing strain layer derived from polishing is removed by sputtering with an argon ion beam. In the mapping, a sample whose observation surface is inclined by 70 degrees with respect to the irradiation direction of the electron beam is irradiated with the electron beam in a step of 2 $\mu$m or less to obtain an EBSD image. The obtained image is stored in 956 $\times$ 956 pixels, strain calculation is performed using CrossCourt4 from BLG Vantage, the magnitude and direction of the strain are calculated, and the elastic stress in the rolling direction is calculated from the result. The reference point of the strain and the elastic stress may be a point farthest away from the irradiation position of the energy ray or the vicinity thereof (within a range of about 10 pixels) within the measurement range of the cross section of the grain-oriented electrical steel sheet.

In the embodiment, the region where the compressive elastic stress in the rolling direction is 10 MPa or more is defined as a region where the elastic stress is introduced. In the region where the elastic stress is introduced, the maximum value of the compressive elastic stress in the rolling direction and the area fraction of the region where the compressive elastic stress in the rolling direction introduced is 20 MPa or more are calculated.

Even when a glass coating and/or an insulating coating to be described later are formed on the surface, the cross section of the base steel sheet is measured because elastic stress is not introduced into the glass coating or the insulating coating.

The grain-oriented electrical steel sheet is contacted with a rolling roll in the manufacturing process thereof, thereby having irregularities formed in the rolling direction. The rolling direction of the grain-oriented electrical steel sheet can be determined by visually checking the irregularities thereof.

The grain-oriented electrical steel sheet according to the embodiment may be made of a steel sheet, but may have a glass coating or an insulating coating on the steel sheet (base steel sheet). Optionally, a glass coating is included on the steel sheet, and an insulating coating is included on the glass coating.

The grain-oriented electrical steel sheet according to the embodiment is significantly characterized by the distribution of the elastic stress introduced into the steel sheet as described above. Therefore, the chemical composition of the base steel sheet, the glass coating, and the insulating coating included in the grain-oriented electrical steel sheet are not limited. For example, the base steel sheet having the following chemical composition, the glass coating, and the insulating coating shown below can be used.

<Base Steel Sheet>

(Chemical Composition)

As the base steel sheet included in the grain-oriented electrical steel sheet according to the embodiment, a known steel sheet can be used, and the chemical composition thereof is not particularly limited. However, in order to obtain characteristics generally required as a grain-oriented electrical steel sheet, the following components (elements) are preferably included to constitute the chemical composition. **In** the embodiment, % relating to the amount of each element is mass% unless otherwise specified. When the grain-oriented electrical steel sheet according to the embodiment has neither a glass coating nor an insulating coating, the chemical composition of the base steel sheet can be regarded as the chemical composition of the grain-oriented electrical steel sheet.

C: 0.010% or less

C (carbon) is an element effective in controlling the microstructure of the steel sheet in steps up to completion of the decarburization annealing step in the manufacturing process. However, when the C content exceeds 0.010%, the magnetic characteristics of the grain-oriented electrical steel sheet, which is a product sheet, are deteriorated. Therefore, in the base steel sheet of the grain-oriented electrical steel sheet according to the embodiment, the C content is preferably 0.010% or less. The C content is more preferably 0.005% or less. The C content is preferably as low as possible, but even when the C content is reduced to less than 0.0001 %, the microstructure control effect is saturated, and manufacturing cost is merely increased. Therefore, the C content may be 0.0001% or more.

Si: 3.00 to 4.00%

Si (silicon) is an element that increases the electric resistance of a grain-oriented electrical steel sheet and improves iron loss characteristics. When the Si content is less than 3.00%, a sufficient eddy-current loss reducing effect cannot be obtained. Therefore, the Si content is preferably 3.00% or more. The Si content is more preferably 3.10% or more, and still more preferably 3.20% or more.

On the other hand, when the Si content exceeds 4.00%, the grain-oriented electrical steel sheet is embrittled, and passability is significantly deteriorated. In addition, workability of the grain-oriented electrical steel sheet is deteriorated, and the steel sheet may be fractured during rolling. Therefore, the Si content is preferably 4.00% or less. The Si content is more preferably 3.80% or less, and still more preferably 3.70% or less.

Mn: 0.01 to 0.50%

Mn (manganese) is an element that is bonded to S in the manufacturing process to form MnS. This precipitate functions as an inhibitor (inhibitor for normal grain growth) and causes secondary recrystallization in steel. Mn is an element that also enhances hot workability of steel. When the Mn content is less than 0.01%, the above effect cannot be sufficiently obtained. Therefore, the Mn content is preferably 0.01% or more. The Mn content is more preferably 0.02% or more.

On the other hand, when the Mn content exceeds 0.50%, secondary recrystallization does not occur, and the magnetic characteristics of steel are deteriorated. Therefore, in the base steel sheet of the grain-oriented electrical steel sheet according to the embodiment, the Mn content is preferably 0.50% or less. The Mn content is more preferably 0.20% or less, and still more preferably 0.10% or less.

N: 0.010% or less

N (nitrogen) is an element that is bonded to Al in the manufacturing process to form AlN that functions as an inhibitor. However, when the N content is more than 0.010%, the inhibitor excessively remains in the base steel sheet of the grain-oriented electrical steel sheet, and the magnetic characteristics are deteriorated. Therefore, in the base steel sheet of the grain-oriented electrical steel sheet according to the embodiment, the N content is preferably 0.010% or less. The N content is more preferably 0.008% or less.

On the other hand, the lower limit of the N content is not particularly limited. Even when the N content is reduced to less than 0.001%, manufacturing cost is merely increased. Therefore, the N content may be 0.001% or more.

sol. Al: 0.020% or less

sol. Al (acid-soluble aluminum) is an element that is bonded to N in the manufacturing process of the grain-oriented electrical steel sheet to form AlN that functions as an inhibitor. However, when the sol. Al content in the steel sheet (base steel sheet) exceeds 0.020%, the inhibitor excessively remains in the steel sheet to deteriorate magnetic characteristics. Therefore, in the base steel sheet of the grain-oriented electrical steel sheet according to the embodiment, the sol. Al content is preferably 0.020% or less. The sol. Al content is more preferably 0.010% or less, and still more preferably less than 0.001%. The lower limit of the sol. Al content is not particularly limited, but even when the content is reduced to less than 0.0001%, manufacturing cost is merely increased. Therefore, the sol. Al content may be 0.0001% or more.

S: 0.010% or less

S (sulfur) is an element that is bonded to Mn in the manufacturing process to form MnS that functions as an inhibitor. However, when the S content exceeds 0.010%, the remaining inhibitor deteriorates magnetic characteristics. Therefore, in the base steel sheet of the grain-oriented electrical steel sheet according to the embodiment, the S content is preferably 0.010% or less. The S content is more preferably as low as possible in the grain-oriented electrical steel sheet. For example, the S content is less than 0.001%. However, even when the S content is reduced to less than 0.0001% in the base steel sheet of the grain-oriented electrical steel sheet, manufacturing cost is merely increased. Therefore, the S content may be 0.0001% or more in the base steel sheet of the grain-oriented electrical steel sheet.

P: 0.030% or less

P (phosphorus) is an element that lowers the workability in rolling. When the P content is 0.030% or less, it is possible to suppress excessive reduction in rolling workability and to suppress fracture during manufacturing. From such a viewpoint, the P content is preferably 0.030% or less. The P content is more preferably 0.020% or less, and further preferably 0.010% or less.

The lower limit of the P content may include 0%. However, since the detection limit of the chemical analysis is 0.0001%, the lower limit of the P content is substantially 0.0001% in the practical steel sheet. In addition, P is also an element having an effect of improving the texture and improving the magnetic characteristics. In order to obtain this effect, the P content may be 0.001% or more, or may be 0.005% or more.

Balance: Fe and impurities

In the grain-oriented electrical steel sheet according to the embodiment, the chemical composition of the base steel sheet contains, for example, the above-described elements, and the balance may include Fe and impurities. However, for the purpose of improving magnetic characteristics and the like, Cr, Sn, Cu, Se, Sb, and Mo may be further contained in the following ranges. In addition, even when other elements, for example, at least any one of W, Nb, Ti, Ni, Bi, Co, and V, are included in a total amount of 1.0% or less, the effect of the grain-oriented electrical steel sheet according to the embodiment is not impaired.

Here, the impurities are contaminated from ore or scrap as a raw material, or from a manufacturing environment or the like when the base steel sheet is industrially manufactured. The impurities mean elements allowed to be included in such an amount that the operation of the grain-oriented electrical steel sheet according to the embodiment is not adversely affected.

Cr: 0 to 0.50%

Cr (chromium) is an element that contributes to an increase in Goss orientation occupancy in the secondary recrystallization structure to improve magnetic characteristics. In order to obtain the above effect, the Cr content is preferably 0.01% or more, more preferably 0.02% or more, and still more preferably 0.03% or more.

On the other hand, when the Cr content exceeds 0.50%, Cr oxide is formed, and the magnetic characteristics are deteriorated. Therefore, the Cr content is preferably 0.50% or less. The Cr content is more preferably 0.30% or less, and still more preferably 0.10% or less.

Sn: 0 to 0.50%

Sn (tin) is an element that contributes to improvement in magnetic characteristics through primary recrystallization structure control. In order to obtain an effect of improving magnetic characteristics, the Sn content is preferably 0.01% or more. The Sn content is more preferably 0.02% or more, and still more preferably 0.03% or more.

On the other hand, when the Sn content exceeds 0.50%, secondary recrystallization is unstable, and magnetic characteristics are deteriorated. Therefore, the Sn content is preferably 0.50% or less. The Sn content is more preferably 0.30% or less, and still more preferably 0.10% or less.

Cu: 0 to 0.50%

Cu (copper) is an element that contributes to an increase in Goss orientation occupancy in the secondary recrystallization structure. Cu is an optional element in the base steel sheet of the grain-oriented electrical steel sheet according to the embodiment. Therefore, the lower limit of the content is 0%. In order to obtain the above effect, the Cu content is preferably 0.01% or more. The Cu content is more preferably 0.02% or more, and still more preferably 0.03% or more.

On the other hand, when the Cu content exceeds 0.50%, the steel sheet is embrittled during hot rolling. Therefore, in the base steel sheet of the grain-oriented electrical steel sheet according to the embodiment, the Cu content is preferably 0.50% or less. The Cu content is more preferably 0.30% or less, and still more preferably 0.10% or less.

Se: 0 to 0.020%

Se (selenium) is an element having an effect of improving magnetic characteristics. Thus, Se may be included. When Se is contained, the amount is preferably 0.001% or more such that Se favorably exhibits the effect of improving magnetic characteristics. The Se content is more preferably 0.003% or more, and still more preferably 0.006% or more.

On the other hand, when the Se content exceeds 0.020%, adhesion of the glass coating is deteriorated. Therefore, the Se content is preferably 0.020% or less. The Se content is more preferably 0.015% or less, and still more preferably 0.010% or less.

Sb: 0 to 0.50%

Sb (antimony) is an element having an effect of improving magnetic characteristics. Thus, Sb may be included. When Sb is contained, the amount is preferably 0.005% or more such that Sb favorably exhibits the effect of improving magnetic characteristics. The Sb content is more preferably 0.01% or more, and still more preferably 0.02% or more.

On the other hand, when the Sb content exceeds 0.50%, adhesion of the glass coating is significantly deteriorated. Therefore, the Sb content is preferably 0.50% or less. The Sb content is more preferably 0.30% or less, and still more preferably 0.10% or less.

Mo: 0 to 0.10%

Mo (molybdenum) is an element having an effect of improving magnetic characteristics. Thus, Mo may be included. When Mo is contained, the Mo content is preferably 0.01% or more in order to favorably exhibit the effect of improving magnetic characteristics. The Mo content is more preferably 0.02% or more, and still more preferably 0.03% or more.

On the other hand, when the Mo content is more than 0.10%, the cold rolling characteristics may be deteriorated, leading to breakage. Therefore, the Mo content is preferably 0.10% or less. The Mo content is more preferably 0.08% or less, and still more preferably 0.05% or less.

As described above, the chemical composition of the base steel sheet of the grain-oriented electrical steel sheet according to the embodiment (may be regarded as the chemical composition of the grain-oriented electrical steel sheet according to the embodiment when the grain-oriented electrical steel sheet according to the embodiment is made only of the base steel sheet) includes, for example, the above-described essential elements and a balance including Fe and impurities; or the above-described essential elements, additionally one or more optional elements, and a balance including Fe and impurities.

In the grain-oriented electrical steel sheet according to the embodiment, the chemical composition of the base steel sheet is determined by a well-known component analysis method. Specifically, swarf is generated from the base steel sheet using a drill, the swarf is recovered, and the recovered swarf is dissolved in an acid to obtain a solution. The solution is subjected to ICP-AES to perform elemental analysis of the chemical composition.

Here, in the chemical composition of the base steel sheet, Si is determined by the method specified in JIS G 1212 (1997) (Methods for determination of silicon content). Specifically, when the above-described swarf is dissolved in an acid, silicon oxide is separated as a precipitate, and thus the precipitate (silicon oxide) is filtered with filter paper, and the mass is measured to determine the Si content.

The C content and the S content are determined by a well-known high frequency combustion method (combustion-infrared absorption method). Specifically, the above-described solution is combusted by high-frequency heating in an oxygen stream, and generated carbon dioxide and sulfur dioxide are detected to determine the C content and the S content.

The N content is determined using a well-known inert gas fusion-thermal conductivity method.

However, when a glass coating and/or an insulating coating (tension-imparting insulating coating) is formed on the surface, the measurement is performed after these glass coating and insulating coating are removed.

The insulating coating can be removed by immersing the grain-oriented electrical steel sheet in a sodium hydroxide aqueous solution containing 30 to 50 mass% of $NaOH$ and 50 to 70 mass% of $H_2O$ at 80 to 90°C for 7 to 10 minutes.

The grain-oriented electrical steel sheet from which the insulating coating has been removed is washed with water, and after water washing, dried with a warm air blower for slightly less than 1 minute (for example, for about 10 to 50 seconds). The dried grain-oriented electrical steel sheet (grain-oriented electrical steel sheet not provided with an insulating coating) is immersed in a hydrochloric acid aqueous solution containing 30 to 40 mass% of $HCl$ at 80 to 90°C for 1 to 10 minutes. Thereby, the glass coating can be removed.

After immersion, the base steel sheet is washed with water, and after water washing, dried with a warm air blower for slightly less than 1 minute (for example, for about 10 to 50 seconds). Thereby, the base steel sheet can be isolated from the grain-oriented electrical steel sheet having a glass coating and an insulating coating.

<Sheet Thickness of Base Steel Sheet: 0.17 to 0.30 mm>

In the grain-oriented electrical steel sheet according to the embodiment, the sheet thickness of the base steel sheet is not limited, but is preferably 0.17 to 0.30 mm in consideration of application to a core of a transformer requiring low noise and low vibration as well as low iron loss. As the sheet thickness is thinner, an effect of reducing eddy-current loss can be obtained and a preferable iron loss can be obtained. Therefore, the upper limit of the sheet thickness of the base steel sheet is preferably 0.30 mm. However, special equipment is required to manufacture a base steel sheet having a sheet thickness of less than 0.17 mm, which is not preferable in terms of production such as an increase in manufacturing cost. Therefore, the lower limit of the sheet thickness is industrially preferably 0.17 mm.

<Glass Coating>

In the grain-oriented electrical steel sheet according to the embodiment, a known glass coating may be formed on the surface of the base steel sheet. The glass coating is an inorganic coating containing magnesium silicate as a main component. The glass coating is formed in final annealing when an annealing separator including magnesia (MgO) applied on the surface of the base steel sheet reacts with a component in the surface of the base steel sheet. The glass coating has a composition derived from the annealing separator and the component of the base steel sheet, and has a microstructure including a $Mg_2SiO_4$ phase as a main phase (50 area% or more) and an $MgAl_2O_4$ phase. In addition to these phases, a precipitate may be included in an amount of about 1 area% or less.

<Insulating Coating>

In the grain-oriented electrical steel sheet according to the embodiment, a known insulating coating (tension-imparting insulating coating) may be formed on the surface of the base steel sheet or on the surface of the glass coating.
The insulating coating imparts electrical insulation properties to the grain-oriented electrical steel sheet to reduce eddy-current loss and improve the iron loss characteristics (reduce iron loss) of the grain-oriented electrical steel sheet. In addition, according to the insulating coating, various properties such as corrosion resistance, heat resistance, and slippage can be obtained in addition to the electrical insulation properties as described above. Further, the insulating coating has a function of applying tension to the grain-oriented electrical steel sheet. When tension is applied to the grain-oriented electrical steel sheet to facilitate the movement of domain walls in the grain-oriented electrical steel sheet, the iron loss characteristics of the grain-oriented electrical steel sheet can be improved (the iron loss can be reduced). The insulating coating is formed, for example, by applying a coating liquid containing a metal phosphate and silica as main components onto the surface of the glass coating and baking the coating liquid.

[Manufacturing Method]

When the grain-oriented electrical steel sheet according to the embodiment has the above-described elastic stress distribution (strain distribution for generating elastic stress distribution), the effect can be obtained regardless of the manufacturing method. Therefore, the manufacturing method is not limited. However, the grain-oriented electrical steel sheet according to the embodiment can be obtained by the following manufacturing method including:

(I) a heating step of heating a steel sheet; and
(II) an irradiation step of irradiating an energy ray to the steel sheet after the heating step, wherein
(II-2) in the irradiation step, the irradiation with the energy ray is performed in a state where the steel sheet has a temperature of 200°C or higher at the surface, and has a temperature of 100°C or lower at a position 20 $\mu$m distant from the surface in the sheet thickness direction.

<Heating Step>

In the heating step, the steel sheet (the grain-oriented electrical steel sheet having been subjected to final annealing and having not been subjected to magnetic domain control) is heated before energy ray irradiation.
In the next step, the irradiation step, the irradiation with the energy ray is performed in a state where the steel sheet has a temperature of 200°C or higher at the surface, and has a temperature of 100°C or lower at a position 20 $\mu$m distant from the surface in the sheet thickness direction. Therefore, in the heating step, it is necessary to rapidly heat only the surface layer area close to the surface.
The heating method is not limited. However, for example, heating by rolling and heating by radiant heat are capable of heating the surface, but cannot secure a sufficient heating rate. Therefore, heating by them increases even the temperature of the inside due to heat transfer, and fails to achieve a state where the steel sheet has a temperature of 200°C or higher at the surface, and has a temperature of 100°C or lower at a position 20 $\mu$m distant from the surface. Heating by energization is even capable of heating the inside of the steel sheet, and fails to achieve a state where the steel sheet has a temperature of 200°C or higher at the surface, and has a temperature of 100°C or lower at a position 20 $\mu$m distant from the

surface.

Therefore, it is preferable to apply high-frequency heating as a method capable of rapidly heating only the surface layer area. When high-frequency heating is performed, the higher the frequency, the more the internal heating is suppressed. Therefore, a higher frequency is preferable. For example, the frequency is 1000 Hz or more.

<Irradiation Step>

In the irradiating step, the steel sheet after the heating step is irradiated with an energy ray in a state where the steel sheet has a temperature of 200°C or higher at the surface, and has a temperature of 100°C or lower at a position 20 $\mu$m distant from the surface in the sheet thickness direction.

When long time passes from the completion of the heating step, the temperature difference between the temperature at the surface and the temperature at a position 20 $\mu$m distant from the surface in the sheet thickness direction gradually becomes smaller due to heat transfer, and the above-described temperature distribution state cannot be kept, even if a state where the steel sheet has a temperature of 200°C or higher at the surface, and has a temperature of 100°C or lower at a position 20 $\mu$m distant from the surface in the sheet thickness direction is achieved at the time of the completion of the heating step. Therefore, the irradiation step is preferably performed within 10 seconds from the completion of the heating step.

Here, when the steel sheet (grain-oriented electrical steel sheet) has a glass coating or an insulating coating on the surface of the base steel sheet, the "surface" as the reference of the temperature measurement position is the surface of the base steel sheet.

The temperature at the surface and the temperature at a position 20 $\mu$m distant from the surface in the sheet thickness direction can be measured by a thermocouple attached to the surface and a thermocouple embedded in the surface layer. Alternatively, in the case of high-frequency heating, the temperature at a position 20 $\mu$m distant from the surface in the sheet thickness direction can be determined by calculating using high-frequency heating simulation software. Examples of the software to be used include JMAG created by Dai-ichi Kiden Co.,Ltd.

When the steel sheet after the heating step is irradiated with an energy ray in a state where the steel sheet has a temperature of 200°C or higher at the surface, and has a temperature of 100°C or lower at a position 20 $\mu$m distant from the surface in the sheet thickness direction, it is possible to obtain a grain-oriented electrical steel sheet having an elastic stress distribution in which the compressive elastic stress in the rolling direction inside the steel sheet has an maximum value of 100 MPa or less; and the region where the compressive elastic stress in the rolling direction introduced is 20 MPa or more is included in a percentage of 50% or more in terms of area fraction with respect to the region where the compressive elastic stress is introduced. The present inventors consider the reason to be as follows.

When normal laser irradiation is performed, in the steel sheet, a strain generating a large compressive elastic stress in the rolling direction is introduced in the vicinity of the surface of the steel sheet irradiated with the laser; on the center side in the sheet thickness direction from the strain, a strain generating a medium compressive elastic stress is introduced; and a strain generating a small compressive elastic stress is introduced in the vicinity of them.

On the other hand, when a portion having a high temperature is irradiated with a laser, strain (and elastic stress associated therewith) is hardly introduced. Therefore, when the grain-oriented electrical steel sheet has the temperature distribution as described above at the time of energy ray irradiation, strain is hardly introduced by laser irradiation, and only the strain generating a small compressive elastic stress in the rolling direction remains in the vicinity of the high temperature surface. This makes it possible to suppress the generation of the strain generating a large compressive elastic stress. Even in a portion at a middle temperature or a low temperature, which is a lower temperature than in the vicinity of the surface, weaker strain is introduced by energy ray irradiation than in the case where heating is not performed in advance, and the generation of the strain generating a small compressive elastic stress is also suppressed. As a result, the strain generating a large compressive elastic stress and the strain generating a small compressive elastic stress, which do not contribute to magnetic domain refinement and deteriorate noise characteristics, are suppressed, and an ideal state for obtaining an excellent iron loss/noise balance, where the strain generating a medium compressive elastic stress, which contributes to magnetic domain refinement, is included in a large percentage, is obtained.

On the other hand, when the temperature at the surface is 200°C or higher at the time of energy ray irradiation, but the temperature at a position 20 $\mu$m distant from the surface is also high, only the strain generating a small compressive elastic stress in the rolling direction remains, and the magnetic domain refinement effect cannot be sufficiently obtained. **In** addition, when the temperature at a position 20 $\mu$m distant from the surface is 100°C or lower, but the temperature of the surface is also lower than 200°C, the effect of heating cannot be obtained.

The energy ray to be irradiated is not limited as long as strain can be introduced by heat. In a method of periodically heating the steel sheet, such as a pulse laser, the steel sheet is melted so that strain is introduced into a deep region from the steel sheet surface. Therefore, the energy ray irradiation is limited to continuous irradiation. The laser is preferably a fiber laser from the viewpoint that the condensing system is easily focused.

For example, laser irradiation is performed under the conditions including a laser scanning pitch of PL = 2.0 to 10.0 mm, a power density of laser irradiation of Ip = 500 to 10000 (W/mm$^2$), and an input energy of Ua = 0.1 to 5.0 (mJ/mm$^2$).

The steel sheet to be subjected to the heating step and the irradiation step may be a known grain-oriented electrical steel sheet, and the manufacturing method thereof is also not particularly limited. That is, a grain-oriented electrical steel sheet manufactured by any manufacturing method may be heated and irradiated with a laser. A general grain-oriented electrical steel sheet is manufactured by a manufacturing method including the following steps:

> a hot rolling step of heating a steel piece such as a slab and hot rolling the steel piece into a hot-rolled steel sheet;
> a hot-band annealing step of subjecting the hot-rolled steel sheet to hot-band annealing;
> a pickling step of pickling the hot-rolled steel sheet after the hot-band annealing step;
> a cold rolling step of subjecting the hot-rolled steel sheet after the pickling step to cold rolling one time or two or more times with an annealing interposed therebetween to obtain a cold-rolled steel sheet;
> a decarburization annealing step of subjecting the cold-rolled steel sheet to decarburization annealing;
> a final annealing step of applying an annealing separator containing an MgO powder as a main component on the front surface and the back surface of the base steel sheet, the cold-rolled steel sheet after the decarburization annealing step, drying the same, and then performing final annealing to form a glass coating; and

a coating forming step of forming an insulation coating on the glass coating.

When a grain-oriented electrical steel sheet having the above-described preferable chemical composition, considering that the content of some elements may be changed by decarburization, final annealing, and the like, it is preferable to use a steel piece including, in terms of mass%, 0.010 to 0.200% of C, 3.00 to 4.00% of Si, 0.010 to 0.040% of sol. Al, 0.01 to 0.50% of Mn, 0.020% or less of N, 0.005 to 0.040% of S, 0.030% or less of P, 0 to 0.50% Cu, 0 to 0.50% of Cr, 0 to 0.50% of Sn, 0 to 0.020% of Se, 0 to 0.50% of Sb, 0 to 0.10% of Mo, and a balance including Fe and impurities.

Examples

The grain-oriented electrical steel sheet of the present invention will be described more specifically with reference to examples. The examples shown below are merely examples of the grain-oriented electrical steel sheet and the manufacturing method thereof according to the present invention, and the grain-oriented electrical steel sheet and the manufacturing method thereof according to the present invention are not limited to the following examples.

From a grain-oriented electrical steel sheet including, as a chemical composition, 0.08% of C, 3.20% of Si, 0.12% of Mn, 0.050% of acid-soluble Al, and a balance including Fe and impurities, and having a sheet thickness of 0.23 mm, a plurality of samples having a size of 500 mm in the rolling direction and 100 mm in the sheet width direction was cut out, and the samples were not heated, or heated with high-frequency heating or roll heating; and irradiated with a laser in a state where the surface and the position 20 $\mu$m distant from the surface in the sheet thickness direction had the temperatures shown in Table 1. For the samples subjected to high-frequency heating, the temperature at a position 20 $\mu$m distant from the surface in the sheet thickness direction was determined by calculating using high-frequency heating simulation software.

The following conditions were adopted as the laser irradiation conditions.

> Scanning direction: sheet width direction
> Scanning pitch PL (interval in rolling direction): 5.0 mm
> Power density of laser irradiation Ip: 500 to 10000 (W/mm$^2$) (shown in the table)
> Input energy Ua: 0.1 to 5.0 (mJ/mm$^2$) (shown in the table)
> Laser light source: fiber laser

From the grain-oriented electrical steel sheet after laser irradiation, using EBSD and the above-described method, in a cross section parallel to both the rolling direction and the sheet thickness direction, the maximum value of the compressive elastic stress in the rolling direction and the percentage of the region (area fraction shown in the table) where the compressive elastic stress introduced is 20 MPa or more and 100 MPa or less with respect to the region where the compressive elastic stress is introduced (the region where a compressive elastic stress of 10 MPa or more in the rolling direction is present) were determined.

The grain-oriented electrical steel sheet after laser irradiation was evaluated for noise characteristics and magnetic characteristics (iron loss) by the following method.

[Noise Characteristics]

For the grain-oriented electrical steel sheet after laser irradiation, the magnetostriction was measured by an AC magnetostriction measurement method, using a magnetostriction measurement device including a laser Doppler vibrometer, an excitation coil, an excitation power supply, a magnetic flux detection coil, an amplifier, and an oscilloscope.

Specifically, the sample was applied with an AC magnetic field so that the maximum magnetic flux density was 1.7 T in the rolling direction, and the change in the length of the sample due to expansion and contraction of the magnetic domain was measured with the laser Doppler vibrometer to obtain a magnetostriction signal. The obtained magnetostriction signal was subjected to Fourier analysis to determine the amplitude $C_n$ of each frequency component $f_n$ (n is a natural number of 1 or more) of the magnetostriction signal. Using an A correction coefficient $\alpha_n$ of each frequency component $f_n$, a magnetostriction velocity level LVA (dB) expressed by the following equation was determined.

$$\text{LVA} = 20 \times \text{Log}(\sqrt{(\Sigma(\rho c \times 2\pi \times f_n \times \alpha_n \times C_n/\sqrt{2})^2)}/\text{Pe0})$$

Here, $\rho c$ is a specific acoustic resistance, and $\rho c = 400$. Pe0 is a minimum audible sound pressure, and $\text{Pe0} = 2 \times 10^{-5}$ (Pa) was used. As the A correction coefficient $\alpha_n$, values shown in Table 2 of JIS C 1509-1 (2005) were used.

Based on the obtained magnetostriction velocity level (LVA), the noise characteristics were evaluated according to the following criteria.

GOOD: Less than 50.0 dBA
BAD: 50.0 dBA or more

[Magnetic Characteristics Evaluation]

A sample of 300 mm in the rolling direction × 60 mm in the sheet width direction including the center position in the sheet width direction of the grain-oriented electrical steel sheet was collected. The length direction of the sample was parallel to the rolling direction.

Using the sample, the iron loss $W_{17/50}$ (W/kg) at a frequency of 50 Hz and a maximum magnetic flux density of 1.7 T was measured in accordance with JIS C2556 (2015).

When the noise characteristics were GOOD and the iron loss was less than 0.750 W/Kg, it was determined that the iron loss/noise balance was excellent.

Table 1 shows the results.

[Table 1]

| | Laser power density (W/mm²) | Input energy (mJ/mm²) | Temperature at surface (°C) | Temperature at position 20 μm distant from surface (°C) | Absolute maximum value of elastic stress (MPa) | Area fraction where compressive elastic stress of 20 MPa or more and 100 MPa or less is introduced (%) | Noise (dBA) | Iron loss ($W_{17/50}$) (W/kg) |
|---|---|---|---|---|---|---|---|---|
| Example 1 | 1000 | 3.0 | 200 | 50 | 40 | 80 | 48 | 0.736 |
| Example 2 | 1000 | 3.0 | 300 | 60 | 40 | 80 | 47 | 0.739 |
| Example 3 | 1000 | 3.0 | 400 | 70 | 50 | 70 | 48 | 0.738 |
| Example 4 | 1000 | 3.0 | 500 | 80 | 60 | 60 | 46 | 0.741 |
| Example 5 | 1000 | 3.0 | 600 | 90 | 70 | 60 | 47 | 0.743 |
| Example 6 | 1000 | 3.0 | 700 | 100 | 80 | 60 | 45 | 0.741 |
| Example 7 | 2500 | 2.5 | 200 | 50 | 50 | 70 | 48 | 0.731 |
| Example 8 | 2500 | 2.5 | 300 | 60 | 60 | 70 | 46 | 0.737 |
| Example 9 | 2500 | 2.5 | 400 | 70 | 60 | 70 | 49 | 0.732 |
| Example 10 | 2500 | 2.5 | 500 | 80 | 70 | 60 | 46 | 0.736 |

(continued)

| | Laser power density (W/mm²) | **Input** energy (mJ/mm²) | Temperature at surface (°C) | Temperature at position 20 μm distant from surface (°C) | Absolute maximum value of elastic stress (MPa) | Area fraction where compressive elastic stress of 20 MPa or more and 100 MPa or less is introduced (%) | Noise (dBA) | Iron loss ($W_{17/50}$) (W/kg) |
|---|---|---|---|---|---|---|---|---|
| Example 11 | 2500 | 2.5 | 600 | 90 | 70 | 60 | 48 | 0.738 |
| Example 12 | 2500 | 2.5 | 700 | 100 | 80 | 50 | 48 | 0.739 |
| Example 13 | 5000 | 2.0 | 200 | 50 | 60 | 70 | 49 | 0.726 |
| Example 14 | 5000 | 2.0 | 300 | 60 | 60 | 70 | 48 | 0.729 |
| Example 15 | 5000 | 2.0 | 400 | 70 | 70 | 60 | 49 | 0.735 |
| Example 16 | 5000 | 2.0 | 500 | 80 | 80 | 60 | 47 | 0.734 |
| Example 17 | 5000 | 2.0 | 600 | 90 | 80 | 60 | 46 | 0.738 |
| Example 18 | 5000 | 2.0 | 700 | 100 | 90 | 60 | 48 | 0.741 |
| Comparative Example 1 | 1000 | 3.0 | 20 | 20 | 120 | 30 | 53 | 0.735 |
| Comparative Example 2 | 1000 | 3.0 | 100 | 30 | 110 | 30 | 52 | 0.736 |
| Comparative Example 3 | 1000 | 3.0 | 200 | 150 | 40 | 30 | 48 | 0.756 |
| Comparative Example 4 | 1000 | 3.0 | 400 | 300 | 30 | 30 | 46 | 0.761 |
| Comparative Example 5 | 2500 | 2.5 | 20 | 20 | 120 | 40 | 54 | 0.730 |
| Comparative Example 6 | 2500 | 2.5 | 100 | 30 | 110 | 40 | 53 | 0.732 |
| Comparative Example 7 | 2500 | 2.5 | 200 | 150 | 50 | 30 | 48 | 0.754 |
| Comparative Example 8 | 2500 | 2.5 | 400 | 300 | 30 | 20 | 49 | 0.762 |
| Comparative Example 9 | 5000 | 2.0 | 20 | 20 | 130 | 40 | 54 | 0.728 |
| Comparative Example 10 | 5000 | 2.0 | 100 | 30 | 110 | 30 | 53 | 0.730 |
| Comparative Example 11 | 5000 | 2.0 | 200 | 150 | 60 | 30 | 49 | 0.761 |
| Comparative Example 12 | 5000 | 2.0 | 400 | 300 | 40 | 30 | 47 | 0.763 |

As can be seen from Table 1, in the examples in which the laser irradiation was performed in a state where the temperature of each of the surface and the position 20 μm distant from the surface in the sheet thickness direction was within the predetermined range, the distribution of elastic stress was in a preferable state, and the noise characteristics and the iron loss characteristics were both excellent.

On the other hand, in the examples (Comparative Examples) in which the laser irradiation was performed in a state where the temperature of at least one of the surface and the position 20 μm distant from the surface in the sheet

**EP 4 703 489 A1**

thickness direction was out of the predetermined range, in a cross section parallel to both the rolling direction and the sheet thickness direction, at least one of the maximum value of the compressive elastic stress in the rolling direction and the percentage of the region where the compressive elastic stress introduced is 20 MPa or more and 100 MPa or less with respect to the region where the compressive elastic stress is introduced was out of the scope of the present invention, and therefore the iron loss/noise balance was poor.

INDUSTRIAL APPLICABILITY

According to the present invention, it is possible to provide a grain-oriented electrical steel sheet excellent in iron loss characteristics and noise characteristics; and a manufacturing method thereof. Therefore, industrial applicability is high.

**Claims**

1. A grain-oriented electrical steel sheet, wherein, in a cross section parallel to both a rolling direction and a sheet thickness direction, compressive elastic stress in the rolling direction measured using EBSD has an maximum value of 100 MPa or less; and a region where the compressive elastic stress in the rolling direction introduced is 20 MPa or more is included in a percentage of 50% or more in terms of area fraction with respect to a region where the compressive elastic stress is introduced.

2. A manufacturing method of a grain-oriented electrical steel sheet, the manufacturing method comprising:

    a heating step of heating a steel sheet; and
    an irradiation step of irradiating an energy ray to the steel sheet after the heating step, wherein
    in the irradiation step, the irradiation with the energy ray is performed in a state where the steel sheet has a temperature of 200°C or higher at a surface, and has a temperature of 100°C or lower at a position 20 $\mu$m distant from the surface in a sheet thickness direction.

## INTERNATIONAL SEARCH REPORT

| International application No. |
| --- |
| **PCT/JP2024/016512** |

| A. | CLASSIFICATION OF SUBJECT MATTER |
| --- | --- |

*C22C 38/00*(2006.01)i; *C21D 8/12*(2006.01)i; *H01F 1/147*(2006.01)i; *H01F 27/245*(2006.01)i; *C22C 38/06*(2006.01)n; *C22C 38/60*(2006.01)n
FI: C22C38/00 303U; C21D8/12 D; H01F27/245; H01F1/147 175; C22C38/60; C22C38/06

According to International Patent Classification (IPC) or to both national classification and IPC

| B. | FIELDS SEARCHED |
| --- | --- |

Minimum documentation searched (classification system followed by classification symbols)

C22C38/00-C22C38/60; C21D8/12; H01F1/147; H01F27/245

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022/113517 A1 (JFE STEEL CORPORATION) 02 June 2022 (2022-06-02) claims, paragraphs [0001]-[0011], [0021], [0027], [0040], table 1 | 1 |
| A | | 2 |
| A | WO 2020/255552 A1 (JFE STEEL CORPORATION) 24 December 2020 (2020-12-24) claims , paragraph [0039] | 1-2 |
| A | JP 2014-19901 A (JFE STEEL CORPORATION) 03 February 2014 (2014-02-03) entire text, all drawings | 1-2 |
| A | JP 2008-106288 A (NIPPON STEEL CORPORATION) 08 May 2008 (2008-05-08) entire text, all drawings | 1-2 |
| A | KR 10-2009-0116516 A (POSCO) 11 November 2009 (2009-11-11) entire text | 1-2 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 July 2024** | **23 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/016512**

| Patent document cited in search report | | | Publication date (day/month/year) | Patent family member(s) | | | Publication date (day/month/year) |
|---|---|---|---|---|---|---|---|
| WO | 2022/113517 | A1 | 02 June 2022 | US | 2024/0011111 | A1 | |
| | | | | claims, paragraphs [0001]-[0013], [0034]-[0038], [0052]-[0054], [0087]-[0092], table 1 | | | |
| | | | | EP | 4223891 | A1 | |
| | | | | CN | 116507746 | A | |
| | | | | CA | 3197565 | A1 | |
| | | | | KR | 10-2023-0109739 | A | |
| | | | | MX | 2023006262 | A | |
| WO | 2020/255552 | A1 | 24 December 2020 | US | 2022/0298599 | A1 | |
| | | | | claims, paragraphs [0060]-[0062] | | | |
| | | | | EP | 3985134 | A1 | |
| | | | | KR | 10-2022-0009449 | A | |
| | | | | CN | 114026258 | A | |
| | | | | CA | 3143693 | A1 | |
| | | | | MX | 2021015737 | A | |
| JP | 2014-19901 | A | 03 February 2014 | (Family: none) | | | |
| JP | 2008-106288 | A | 08 May 2008 | US | 2009/0272464 | A1 | |
| | | | | entire text, all drawings | | | |
| | | | | WO | 2008/050700 | A1 | |
| | | | | EP | 2083091 | A1 | |
| | | | | KR | 10-2009-0064419 | A | |
| | | | | CN | 101528951 | A | |
| | | | | RU | 2400542 | C1 | |
| | | | | TW | 200831676 | A | |
| | | | | BR | PI0717360 | A2 | |
| | | | | PL | 2083091 | T3 | |
| KR | 10-2009-0116516 | A | 11 November 2009 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023073594 A
- JP 4669565 B
- JP 4510757 B
- JP 3361709 B
- JP 6060988 B
- JP 6176282 B
- JP 5884165 B